(19) Europäisches Patentamt
European Patent Office
Office européen des brevets

(11) Publication number: 0 270 709 B1

(12) # EUROPEAN PATENT SPECIFICATION

(45) Date of publication of patent specification: **06.02.91 Bulletin 91/06**

(51) Int. Cl.$^5$: **C08F 20/10**, C08F 2/38

(21) Application number: **86309546.9**

(22) Date of filing: **08.12.86**

(54) **Process for the production of vinyl polymers.**

(43) Date of publication of application: **15.06.88 Bulletin 88/24**

(45) Publication of the grant of the patent: **06.02.91 Bulletin 91/06**

(84) Designated Contracting States: **DE FR GB NL**

(56) References cited:
EP-A- 212 980
EP-A- 217 545
EP-A- 231 395
DE-A- 2 944 092
DE-B- 1 146 254
US-A- 2 946 770
US-A- 3 113 114
US-A- 3 565 822
US-A- 4 429 092

(73) Proprietor: **SUMITOMO CHEMICAL COMPANY, LIMITED**
**Kitahama 4-chome 5-33**
**Chuo-ku Osaka 541 (JP)**

(72) Inventor: **Kato, Yasuyuki**
**5-4 Hoshigoe-cho**
**Niihama Ehime (JP)**
Inventor: **Yuyama, Masahiro**
**7-24 Hoshigoe-cho**
**Niihama Ehime (JP)**
Inventor: **Moritani, Masahiko**
**15-38, Takatsu-cho**
**Niihama Ehime (JP)**
Inventor: **Yasunori, Yukio**
**2-10-2-226, Sonehigashi-machi**
**Toyonaka Osaka (JP)**

(74) Representative: **Hardisty, David Robert et al**
**BOULT, WADE & TENNANT 27 Furnival Street**
**London EC4A IPQ (GB)**

EP 0 270 709 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to a process for the production of vinyl polymers, more particularly to a process for the production of vinyl polymers having excellent properties by polymerizing rapidly a specific vinyl monomer in the presence of specific polymerization initiator and other promoters. The vinyl polymers of this invention have excellent properties, such as excellent transparency, high strength and further low hygroscopicity and high refractive index, and hence, are useful for optical parts, such as lenses, prisms and informations recording discs.

## Prior Art

German patent Publication (Auslegeschrift) No. 1,146,254 discloses a process for polymerizing methacrylate etc. by using a catalyst comprising an alkylacyl peroxide, a halogen-containing compound such as an amine hydrochloride, a compound containing one or two SH groups and optionally a heavy metal compound.

Japanese Patent First Publication (Kokai) No. 1518/1984 discloses a process for polymerizing a mixture of 50 to 85% by weight of methyl methacrylate, 15 to 50% by weight of cyclohexyl methacrylate and 0 to 30% by weight of other copolymerizable monomer in the presence of a radical polymerization initiator for a comparatively long period of time. In working examples of this Japanese patent, a methacrylate resin having a low hygroscopicity is produced by polymerizing a monomer mixture for 42 minutes to 18 hours.

It is also known that polymer resins having a high refractive index can be produced by polymerizing a monomer which has a group having a large atomic refraction, such as aromatic ring-containing monomers and halogen-containing monomers. For instance, it is disclosed in Japanese Patent First Publication (Kokai) Nos. 136,309/1984, 136,310/1984, 136,311/1984 and 28,412/1985 that resins having a high refractive index can be produced by subjecting tribromophenyl methacrylate, polyethylene glycol dimethacrylate, methyl methacrylate, styrene or other vinyl monomers to a casting polymerization in the presence of a radical polymerization initiator such as peroxides or azo compounds.

Besides, Japanese Patent First Publication (Kokai) No. 23,408/1985 discloses a process for polymerizing benzyl methacrylate and divinylbenzene in the presence of a polymerization initiator by thermal polymerization, photopolymerization or radiation polymerization, and the like.

Attention also is drawn to our earlier European applications EP-A-0 212 980 and EP-A-0 217 545.

## Brief Summary of the Invention

An object of the invention is to provide a polymer having high transparency and high mechanical strength and hence being suitable for optical parts by a rapid polymerization of an unsaturated monomer.

It is known that when optical parts have hygroscopicity, it absorbs moisture and swells to result in deformation. In order to improve the hygroscopicity, a hydrophobic unsaturated monomer is used as the starting monomer, but a polymer obtained from such a monomer shows unfavorably lower mechanical strength. It is also known that when optical parts having a large refractive index are required, a halogen-containing unsaturated monomer is used as the starting monomer, but the polymerization of such a monomer is hardly completed and hence unreacted unsaturated monomer is retained in the resulting polymer, which causes lowering of the mechanical properties.

Thus, the main object of this invention is to provide an improved process for the production of a polymer having excellent properties suitable for optical parts while maintaining the excellent mechanical strength. Another object of the invention is to provide a process for the production of vinyl polymers having excellent properties by rapid polymerization of an unsaturated monomer in the presence of specific polymerization initiator and other promoters.

## Detailed Description of the Invention

This invention provides a process for the production of vinyl polymers which comprises polymerizing 100 parts by weight of a vinylic unsaturated monomer selected from a methacrylate of alcohols having 2 to 25 carbon atoms or phenols, a styrene derivative containing chlorine or bromine in the molecule thereof, a methacrylate containing chlorine or bromine in the molecule thereof, and an acrylate containing chlorine or bromine in the molecule thereof, or a mixture thereof which contains optionally a polymer of said monomer or monomers in the presence of 0.1 to 5 parts by weight of a radical polymerization initiator selected from a peroxy ester and a hydroperoxide, 0.005 to 1 part by weight of a chlorine-containing compound selected

from an amine hydrochloride and a quaternary ammonium chloride, 0.1 to 0.8 ppm (calculated as metallic copper) per weight of said monomer of a copper compound selected from an organic acid copper salt and a copper-containing complex, and an amount satisfying the following equation of an S-containing compound containing two or more SH groups :

$$\frac{\text{Molar number of the S-containing compound}}{\text{Molar number of the Cu-containing compound}} \quad \frac{\text{Number of SH groups}}{\text{Number of copper atoms}} = 5{,}000 - 80{,}000.$$

The vinylic unsaturated monomer used in this invention includes methacrylic esters of an alcohol having 2 to 25 carbon atoms or phenols ; styrene derivatives which contain chlorine or bromine in the molecule thereof ; methacrylates and acrylates which contain chlorine or bromine in the molecule thereof, which can be used alone or in combination of two or more thereof.

The alcohols having 2 to 25 carbon atoms include aliphatic, alicyclic and aromatic alcohols. Suitable examples of the aliphatic alcohols are ethanol, propanol, butanol, hexanol, octanol, dodecyl alcohol and stearyl alcohol. When these monomers have higher carbon number, the polymers obtained therefrom have lower hygroscopicity. In order to obtain the desired polymer having a less hygroscopicity, it is preferable to use methacrylates of aliphatic or aromatic alcohols having 6 to 25 carbon atoms or of aromatic alcohols or phenols.

The methacrylates of alicylic or aromatic alcohols having 6 to 25 carbon atoms or of phenols can be obtained by esterifying the alcohols or phenols with methacrylic acid or hydrochloride thereof.

The alicyclic alcohols having 6 to 25 carbon atoms includes specifically cyclohexanol, 4-methylcyclohexanol, 1-cyclohexylethanol, 2-adamantanol, 3-methyl-1-adamantanol, 3-ethyladamantanol, 3-methyl-5-ethyl-1-adamantanol, 3,5,8-triethyl-1-adamantanol, 3,5-dimethyl-8-ethyl-1-adamantanol, octahydro-4,7-menthanoinden-1-ylmethanol, p-menthanol-8, p-menthanol-2,3-hydroxy-2,6,6-trimethylbicyclo[3.1.1]heptane, 3,7,7-trimethyl-4-hydroxybicyclo[4.1.0]heptane, isoborneol, 2-methylcamphanol, ℓ-menthanol and 2,2,5-trimethylcyclohexanol.

The aromatic alcohols having 6 to 25 carbon atoms include specifically benzyl alcohol,

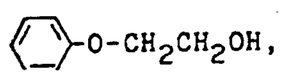,

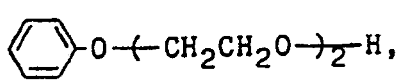, 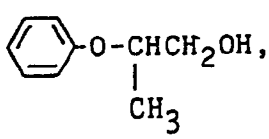, 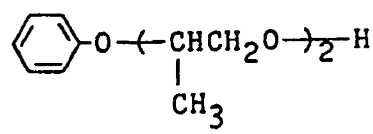,

and the like. The phenols having 6 to 25 carbon atoms include phenol and cresol.

In order to obtain the desired polymer having a high refractive index, there is used at least one monomer selected from styrene derivatives, methacrylates and acrylates which all contain chlorine or bromine in the molecule thereof.

The styrene derivatives containing chlorine or bromine in the molecule include styrene compounds having chlorine or bromine substituent on the benzene ring, for example, monochlorostyrene, dichlorostyrene, trichlorostyrene, monobromostyrene, dibromostyrene, tribromostyrene, monochloro-α-methylstyrene, dichloro-α-methylstyrene and trichloro-α-methylstyrene.

The (meth)acrylates containing chlorine or bromine in the molecule include (meth)acrylic esters of monovalent or di- or more valent aliphatic, alicyclic or aromatic alcohols or phenols which contain chlorine or bromine in the molecule [in this specification, the term "(meth)acrylate" and "(meth)acrylic" mean both of methacylate and acrylate, and both of methacrylic and acrylic, respectively]. The (meth)acrylates include, for example, compounds of the following formulae (I) to (VI) :

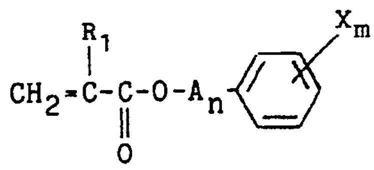

(I)

wherein $R_1$ is hydrogen atom or methyl, A is $-CH_2CH_2O-$ or

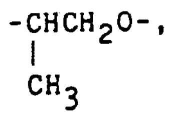

X is chlorine or bromine atom, m is an integer of 1 to 5, and n is an integer of 0 to 5 ;

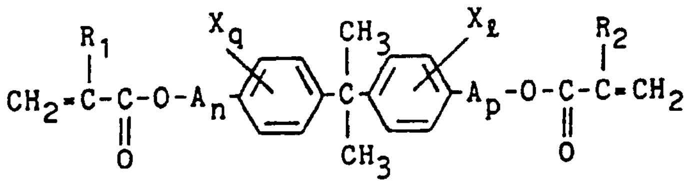

(II)

wherein $R_1$ and $R_2$ are each hydrogen atom or methyl, A is $-CH_2CH_2O-$ or

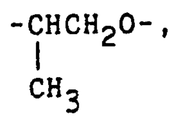

X is chlorine or bromine atom, n and p are each an integer of 0 to 5, and q and $\ell$ are each an integer of 1 to 4 ;

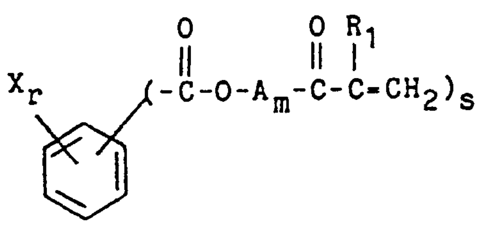

(III)

wherein $R_1$ is hydrogen atom or methyl, A is $-CH_2CH_2O-$ or

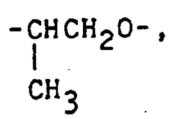

X is chlorine or bromine atom, m is an integer of 1 to 5, r is an integer of 1 to 5, and s is an integer of 1 to 2 ;

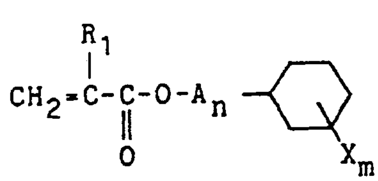

(IV)

wherein $R_1$ is hydrogen atom or methyl, A is $-CH_2CH_2O-$ or

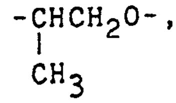

X is chlorine or bromine atom, m is an integer 1 of to 5, and n is an integer of 0 to 5 ;

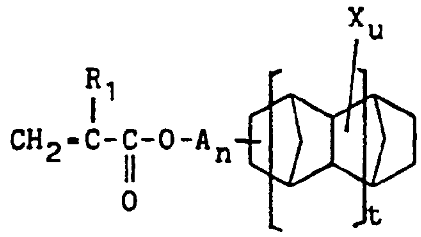

(V)

wherein $R_1$ is hydrogen atom or methyl, A is $-CH_2CH_2O-$ or

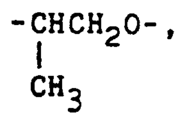

X is chlorine or bromine atom, n is an integer of 1 to 5, t is an integer of 0 to 3, and u is an integer of 1 to 18 ;

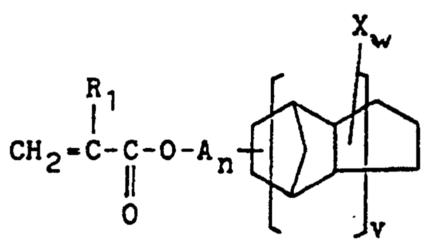

(VI)

wherein $R_1$ is hydrogen atom or methyl, A is $-CH_2CH_2O-$ or

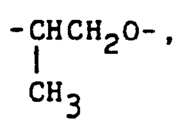

X is chlorine or bromine atom, n is an integer of 1 to 5, w is an integer of 1 to 18, and v is an integer of 1 to 3.

Specific examples thereof are monobromophenyl (meth)acrylate, dibromophenyl (meth)acrylate, tribromophenyl (meth)acrylate, monochlorophenyl (meth)acrylate, dichlorophenyl (meth)acrylate, trichlorophenyl (meth)acrylate, and further compounds containing an alkyleneoxy group as the group "$A_n$" in the above formula (I) in the above esters, i.e. the alcohol moiety of the above esters containing an alkyleneoxy group selected from ethyleneoxy, diethyleneoxy, triethyleneoxy, propyleneoxy, dipropyleneoxy, and tripropyleneoxy ; dibromobisphenol-A di(meth)acrylate, tetrabromobisphenol-A di-(meth)acrylate, and compounds containing alkyleneoxy group as the group "$A_n$" or "$A_p$" in the formula (II) in the above esters, i.e. the bisphenol moiety of the above esters containing an alkyleneoxy group selected from ethyleneoxy, diethyleneoxy, triethyleneoxy, propyleneoxy, dipropyleneoxy, and tripropyleneoxy ; dibromo-di[2-(meth)acryloxyethyl] phthalate, tetrabromo-di[2-(meth)acryloxyethyl] phthalate, bromocyclohexyl (meth)acrylate, dibromocyclohexyl (meth)acrylate, tribromocyclohexyl (meth)acrylate, tetrabromocyclohexyl (meth)acrylate, and further compounds containing an alkyleneoxy group as the group "$A_m$" in the

above formula (III) or "$A_n$" i the formula (IV) in the above esters, i.e. the alcohol moiety of the above esters containing an alkyleneoxy group selected from ethyleneoxy, diethyleneoxy, triethyleneoxy, propyleneoxy, dipropyleneoxy, and tripropyleneoxy ; and bromonorbornyl (meth)acrylate, dibromonorbornyl (meth)acrylate, dibromodicyclopentanyl (meth)acrylate, dibromotricyclopentanyl (meth)acrylate, dibromotetracyclopentanyl (meth)acrylate, and further compounds containing an alkyleneoxy group as the group "$A_n$" in the above formula (V) or (VI) in the above esters, i.e. the alcohol moiety of the above esters containing an alkyleneoxy group selected from ethyleneoxy, diethyleneoxy, triethyleneoxy, propyleneoxy, dipropyleneoxy, and tripropyleneoxy.

The above unsaturated monomers may be used alone, but may optionally be used together with other copolymerizable, monofunctional unsaturated monomers in order to improve more the properties of the resulting polymers.

In case of using methacrylates of alcohols having 2 to 25 carbon atoms or phenols, suitable examples of the copolymerizable, unsaturated monomers are (meth)acrylates, such as methyl methacrylate, methyl acrylate, ethyl acrylate, butyl acrylate, isopropyl acrylate, and cyclohexyl acrylate ; styrenes such as styrene, p-methylstyrene, α-methylstyrene and acrylonitrile. These monofunctional unsaturated monomers are used in an amount of less than 50% by weight based on the whole weight of the monomers. When the amount of the monofunctional unsaturated monomer is larger than 50% by weight, it affects on the properties of the polymer, that is, it is deteriorated in transparency and weatherability which are originally present in methacrylic resins.

In case of using the styrene derivatives, methacrylates or acrylates which contain chlorine or bromine atom in the molecule thereof as the unsaturated monomer, suitable examples of the copolymerizable, monofunctional unsaturated monomers are (meth)acrylates of aliphatic, alicyclic or aromatic alcohols having 1 to 25 carbon atoms or phenols, such as methyl (meth)acrylate, ethyl (meth)acrylate, propyl (meth)acrylate, butyl (meth)acrylate, cyclohexyl (meth)acrylate, dicyclopentanyl (meth)acrylate ; styrenes such as styrene, p-methylstyrene, α-methylstyrene ; and acrylonitrile. Such copolymerizable monomers are used in an amount of less than 50% by weight, based on the whole weight of the monomers. When the copolymerizabe monomer is used in an amount of larger than the above upper limit, the polymer shows inferior refractive index.

The starting monomers may be used as they stand, but preferably used in the form of a syrup (i.e. a mixture of the monomers and a part of a polymer thereof) in order to improve the polymerization activity and also in view of easier handing thereof.

The syrup is prepared by dissolving 1 to 40% by weight of a polymer of the monomer in the monomer or monomers, or by partly polymerizing the monomer(s) in the presence of a radical polymerization initiator.

In addition to the above-mentioned unsaturated monomers, there may be used a polyfunctional unsaturated monomer having two or more functional groups in order to improve further the strength of the resulting polymer and also to increase the polymerization speed.

When the polyfunctional monomer is used in a usual polymerization reaction having a comparatively low polymerization speed, it results in formation of partial gel within the polymer and hence there is obtained ununiform polymer, but in the present invention wherein the polymerization is carried out rapidly, there is no problem of the formation of gel and there can be obtained the desired uniform polymer.

Suitable examples of the polyfunctional unsaturated monomer are acrylates or methacrylates of ethylene glycol or oligomers thereof (i.e. both terminal hydroxy groups of ethylene glycol or oligomers thereof being esterified with acrylic or methacrylic acid), such as ethylene glycol diacrylate, ethylene glycol dimethacrylate, diethylene glycol diacrylate, diethylene glycol dimethacrylate, triethylene glycol diacrylate, triethylene glycol dimethacryate, tetraethylene glycol diacrylate, tetraethylene glycol dimethacrylate, nonaethylene glycol diacrylate, nonaethylene glycol dimethacrylate, tetradecaethylene glycol diacrylate, tetradecaethylene glycol dimethacrylate ; acrylates or methacrylates of other divalent alcohols (i.e. both hydroxy groups of divalent alcohols being esterified with acrylic or methacrylic acid), such as neopentyl glycol diacrylate, neopentyl glycol dimethacrylate, hexanediol diacrylate, hexanediol dimethacrylate, butanediol diacrylate, butanediol dimethacrylate ; acrylates or methacrylates of bisphenol A or bisphenol A alkyleneoxide adduct (i.e. therminal hydroxy group of bisphenol A or bisphenol A alkyleneoxide adduct being esterified with acrylic or methacrylic acid) ; acrylates or methacrylates of polyvalent alcohols (e.g. trimethylolpropane, pentaerythritol) ; glycidyl acrylate or glycidyl methacrylate adducts of the above divalent or polyvalent alcohols (i.e. the compounds obtained by epoxy group-ring opening addition reaction of glycidyl acrylate or glycidyl methacrylate to the terminal hydroxy group of the above divalent or polyvalent alcohols) ; glycidyl acrylate or glycidyl methacrylate adducts of dibasic acids such as succinic acid, adipic acid, telephthalic acid (i.e. the compounds obtained by epoxy group-ring opening addition reaction of glycidyl acrylate or glycidyl methacrylate to the dibasic acids) ; allyl methacrylate and divinylbenzene.

These polyvalent monomers are used in an amount of 1 to 30 parts by weight, preferably 1 to 10 parts by weight, per 100 parts by weight of the monofunctional monomers or syrup thereof. When the amount of the polyfunctional monomers is less than 1 part by weight, the desired improvement in strength of the polymer and polymerization activity is not expected, and on the other hand, when the amount is over 30 parts by weight, the strength of the polymer is rather lowered.

The radical polymerization initiator used in this invention is preferably peroxides, particularly peroxy esters and hydroperoxides in view of the high polymerization activity thereof. Suitable examples of the peroxy esters are t-butyl peroxy-3,5,5-trimethylhexanoate, t-butyl peroxyacetate and t-butyl peroxybenzoate. Suitable examples of the hydroperoxides are t-butyl hydroperoxide, cumene hydroperoxide, diisopropybenzene hydroperoxide, p-menthane hydroperoxide, 2,5-dimethylhexane-2,5-dihydroperoxide and 1,1,3,3-tetramethylbutyl hydroperoxide. The initiator is used in an amount of 0.1 to 5 parts by weight per 100 parts by weight of the monomer or syrup thereof. When the amount of the initiator is less than 0.1 part by weight, the polymerization reaction proceeds insufficiently, and hence, a large amount of monomers is remained in the resulting polymer. On the other hand, when the amount is more than 5 parts by weight, it is very difficult to control the polymerization reaction, and hence, the resulting polymer has unfavorably inferior weatherability and less heat resistance.

The chlorine-containing compounds such as amine hydrochloride and quaternary ammonium chloride include, for example, hydrochlorides of amines such as n-amylamine, n-hexylamine, n-octylamine, n-decylamine, laurylamine, palmitylamine, dibutylamine, tributylamine, N,N-dimethylbenzylamine, N,N-dimethyl-p-toluidine, phenethyldibutylamine, N,N,N',N'-tetramethylhexamethylenediamine, N,N,N'N'-tetramethylpropylenediamine, N,N-diethylbenzylamine, N,N-dibutylbenzylamine, phenethyldiethylamine ; quaternary ammonium chlorides, such as tetramethylammonium chloride, benzyltrimethylammonium chloride, benzyltriethylammonium chloride, benzyltributylammonium chloride, trioctylmethylammonium chloride and β-phenethydibutylethoxycarbonylmethylammonium chloride. These compounds are used in an amout of 0.005 to 1 part by weight, preferably 0.01 to 0.5 part by weight, per 100 parts by weight of the monomer or syrup thereof.

The organic acid copper salts or copper-containing complexes used in this invention function as a catalyst for decomposing the polymerization initiator and include, for example, copper naphthenate and copper acetylacetonate. These are used in an amount of 0.1 to 0.8 ppm (calculated as metallic copper) based on the weight of the starting monomer. When the amount of the copper compounds is less than 0.1 ppm, the polymerization speed is unfavorably lower and the polymerization time is not fixed, and on the other hand, when the amount is more than 0.8 ppm, the polymerization speed is also unfavorably lower.

The S-containing compound, i.e. the compound containing two or more SH groups used in this invention is a reducing agent which forms a Redox catalyst with a radical polymerization initiator. The S-containing compound acts as an excellent reducing agent and acts also as a chain transfer agent, and hence, when it is used in a too large amount, the resulting polymer has lower molecular weight and shows inferior strength. The compound containing two or more SH groups has similar function as a reducing agent to a compound containing one SH group, but show less function as a chain transfer agent in comparison with the latter. Accordingly, comparing on the basis of the same molar number x number of SH group, in case of using a compound containing two or more SH groups as used in this invention, the resulting polymer has larger molecular weight and higher strength than that in the case of a compound containing one SH group, while the polymerization speed is similar or the same in both cases.

The compounds containing two or more SH groups include esters of mercaptoalkylcarboxylic acids and polyvalent alcohols, for example, glycol dimercaptoacetate, trimethylolpropane trimercaptoacetate, pentaerythritol tetramercaptoacetate, glycol di(3-mercaptopropionate), trimethylolpropane tri(3-mercaptopropionate), pentaerythritol tetra(3-mercaptopropionate), glycerol dimercaptoacetate, glycerol trimercaptoacetate, glycerol di(3-mercaptopropionate) and glycerol tri(3-mercaptopropionate). The S-containing compounds may be used aloe or in combination of two or more thereof. The S-containing compounds are usually used in an amount of the range as shown in the following equation :

$$\frac{\text{Molar number of the S-containing compound} \times \text{Number of SH groups}}{\text{Molar number of the Cu-containing compound} \times \text{Number of copper atoms}} = 5{,}000 - 80{,}000$$

When the value of the above equation is less than 5,000, the polymerization speed becomes extremely

low, and on the other hand, when the value is more than 80,000, the resulting polymer shows inferior strength.

The polymerization reaction in this invention is usually carried out by a bulk polymerization reaction, wherein a liquid composition is prepared by dissolving a radical polymerization initiator, a reductive compound containing sulfur in the molecule, a copper-containing compound and a specific tertiary amine hydrohamogenate or a halogenated quaternary ammonium in an unsaturated monomer or monomer mixture or a syrup thereof (i.e. a monomer or monomer mixture containing partly a polymer of said monomer or monomers), and the liquid composition is entered into a mold and then subjected to polymerization reaction and molding. In this case, each component may separately be entered into the mold, but in such a case, they are hardly mixed and reacted uniformly in view of the high polymerizability. Accordingly, it is preferable to previously dissolve each of the radical polymerization initiator, reductive compound and copper-containing compound in a part of the monomer or syrup thereof separately, and then to mix a fixed amount of these solutions just before subjecting to the polymerization reaction.

The polymerization reaction may be carried out at room temperature but preferably at an elevated temperature, for instance, at a temperature of 50°C or higher, in order to promote the polymerization reaction. The reaction can proceed in such a manner as follow. The monomer(s) or syrup thereof and the polymerization initiator and others are entered into a mold and then the mold is heated at a temperature of 50°C or higher, or the mold is previously heated to a prescribed temperature of 50°C or higher and thereto are added the monomer(s) or syrup thereof, followed by subjecting to the polymerization reaction.

The mold used in this invention is preferably a metallic mold (e.g. stainless steel mold) in view of the strength and the easier removal of heat.

According to the process of this invention, the starting unsaturated monomer(s) can be polymerized rapidly and there can be obtained the desired polymer having excellent properties, and further, the polymer (resin) can be obtained in various shapes as desired. That is, by varying the shape of mold, the resulting polymer can be formed in the desired shape. In view of less inner strain of the polymer, the process of this invention is suitable for the production of optical parts, such as conventional lenses, Fresnel's lens, optical recording discs, prisms and mirrors. According to the process of this invention, the face of the mold can precisely be transferred, and hence, it is particularly suitable for the production of Fresnel's lens which requires extremely high precision in shape.

Moreover, the process of this invention is also applicable to the production of oversized products, for example, automobile parts such as front window, sun roof, side window and rear window, and further sign boards, water tank panel and bathtub.

This invention illustrated by the following Examples and Reference Examples, but should not be construed to be limited thereto.

Various properties in the examples were measured by the following methods.

Refractive index : measured with Abbe refractomer at 25°C.

Haze : measured by a similar method as disclosed in ASTM D-1003.

Degree of yellow color : measured by using SEP-H-2D POIC Integration Sphere type Haze meter manufactured by Nippon Precision Optical Instrument Co., Ltd., wherein the total light permeability was measured with A, G and B filters, respectively, and the degree of yellow color was calculated by the following equation :

$$\text{Degree of yellow color} = 100 \times (A - B)/G$$

wherein A, B and G means each total light permeability in the case of using A, B and G filters, respectively.

Residual monomer in the polymer : measured by extracting it with acetone and quantitatively measuring the amount by gas chromatography.

## Examples 1 and 2 and Reference Examples 1 and 2

A two liter glass-made flask is charged with dicyclopentanyl methacrylate (700 g) and methyl methacrylate (300 g) and thereto is added azobisisobutyronitrile (0.04 g), and the mixture is polymerized at 80°C. When the viscosity of the inner solution in the flask becomes about 2 dPas (poise), the reaction mixture is cooled to stop the polymerization reaction, and thereby, there is obtained a syrup containing a copolymer of dicyclopentanyl methacrylate and methyl methacrylate.

To the above syrup (100 g) are added t-butyl peroxybenzoate (0.96 g), an 8 wt.% solution (1 g) of phenethyldibutylamine hydrochloride in dimethyl phthalate, a 1 wt.% solution (0.04 g) of copper naphthenate (Cu content : 10%) in methyl methacrylate, and glycol dimercaptoacetate in an amount as show in Table

1. The mixture is entered into a stainless steel mold (160×150×3 mm) and subjected to polymerization reaction on a water bath of 85°C, whereby the time for curing and also the flexural strength of the resulting polymer are measured. The results are shown in Table 1.

TABLE 1

| Ex No. | Amount of GDMA*1 (g) | SH/CU*2 | Curing time (min.) | Flexural strength $N/mm^2$ | Appearance |
|---|---|---|---|---|---|
| Ex. 1 | 2 | 30238 | 3 | 11.1 (180) | Good |
| " 2 | 0.6 | 9071 | 3 | 21.6 (220) | Good |
| Ref. Ex. 1 | 6 | 90714 | 6 | - *3 | Yellow |
| " 2 | 0.3 | 4500 | 25 | 55.9 (570) | Good |

*1) GDMA : glycol dimercaptoacetate
*2) SH/Cu = molar number of S-containing compound x number of SH group/molar number of Cu- containing compound x number of copper atom
*3) The polumer in Reference Example 1 cracked during cooling after completion of the polymerization.
In Table 1 the values of flexural strengh in brackets are in $Kg/cm^2$ units.

## Example 3

A three liter glass-made flask is charged with cyclohexyl methacrylate (1,200 g), methyl methacrylate (300 g) and azobisisobutyronitrile (0.5 g), and the mixture is polymerized with gentle stirring at 85°C. When the viscosity of the inner solution in the flask becomes 2 dPas (poise), the reaction mixture is cooled to stop the polymerization reaction, and thereby, there is obtained a syrup containing a copolymer of cyclohexyl methacrylate and methyl methacrylate.

To the above syrup (60 g) are added t-butyl peroxybenzoate (0.6 g), glycol dimercaptoacetate (0.6 g, the molar number of this compound x number of SH group : 0.0057), an 8 wt.% solution (0.8 g) of phenethyldibutylamine hydrochloride in dimethyl phthalate, and a 0.1 wt.% solution (0.2 g) of copper naphthenate (Cu content 10%) in methyl methacrylate. After mixing for one minute, the mixture is entered into a mold (150×150×3 mm) and subjected to polymerization reaction on a water bath of 85°C. The polymerization is completed in about two minutes. The flexural strength of the resulting polymer is shown in Table 2.

## Reference Example 3

The polymerization reaction is carried out by using the same syrup as prepared in Example 3 in the same manner as described in Example 3 except that t-dodecylmercaptane (1.15 g, the molar number of this compound x number of SH group : 0.0057) is used instead of glycol dimercaptoacetate. The flexural strength of the resulting polymer is measured likewise. The result is shown in Table 2.

TABLE 2

| Ex. 3 | Curing time (min.) | SH/Cu | Flexural strength $N/mm^2$ |
|---|---|---|---|
| Ex. 3 | 2 | 18097 | 21.6 (220 kg/cm2) |
| Ref. Ex. 3 | 2 | 18097 | 8.4 ( 86 kg/cm2) |

## Examples 4 and 5 and Reference Examples 4 and 5

The polymerization is carried out in the same manner as described in Example 3 except that to the syrup of cyclohexyl methacrylate (100 g) are added t-butyl peroxybezoate (0.96 g), a 8 wt.% solution (1 g) of phenethyldibutylamine hydrochloride in dimethyl phthalate, glycol dimercaptoacetate (0.6 g) and copper naphthenate of the amount as shown in Table 3. The results are shown in Table 3.

TABLE 3

| Ex. No. | Amount of Cu (ppm) | SH/Cu | Curing time (min.) | Appearance |
|---|---|---|---|---|
| Ex. 4 | 0.2 | 18142 | 3 | Good |
| " 5 | 0.6 | 6047 | 3 | Good |
| Ref. | | | | |
| Ex. 4 | 1 | 3628 | 30 | Blue |
| " 5 | 0 | - | 50 | Good |

Example 6

A 200 ml glass-made flask is charged with methyl methacrylate (36 g) and tetradecaethylene glycol dimethacrylate (10 g) and therein is dissolved tribromophenyl methacrylate (54 g). After dissolving tribromophenyl methacrylate, to the mixture are added t-butyl peroxybenzoate (0.96 g), an 8 wt.% solution (1 g) of phenethyldibutylamine hydrochloride in dimethyl phthalate, glycol dimercaptoacetate (0.6 g) and a 1 wt.% solution (0.02 g) of copper naphthenate (Cu content 10%) in methyl methacrylate. The mixture is entered into a stainless steel mold (160×160×3 mm) and subjected to polymerization reaction on a water bath of 85°C. The curing is completed in 2.4 minutes to give a colorless transparent, cured product. The product has an SH/Cu of 19,048, a refractive index of 1.56, a haze of 0.5, a flexural strength of 58.8 N/mm$^2$ (600 kg/cm$^2$) and a degree of yellow color of 2.0.

Reference Example 6

A ten liter autoclave is charged with methyl methacrylate (1350 g), tribromophenyl methacrylate (1500 g), methyl acrylate (150 g) and azobisisobutyronitrile (6 g), and the mixture is mixed and dissolved at room temperature for 30 minutes. To the mixture are added an aqueous solution of sodium hydrogenphosphate (12 g) in a 0.1% aqueous poly(sodium methacrylate) solution (6,000 g), and the mixture is reacted at 85°C for 2 hours, at 100°C for one hour and further at 120°C for one hour with vigorous agitation. The reaction mixture is cooled, dehydrated and dried to give a polymer.

The polymer obtained above is pelletized with a 40 mmϕ extruder at 260°C, followed by subjecting to injection molding at 260°C. The molded product thus obtained has a haze of 20, a degree of yellow color of 25, a flexural strength of 4.9 N/mm$^2$ (50 kg/cm$^2$) and show very bad transparency. Besides, it is colored in yellow and is brittle. Thus, the injection-molded product of the polymer of tribromophenyl methacrylate is not suitable for optical parts.

Example 7

The polymerization is carried out in the same manner as described in Example 6 except that instead of using methyl methacrylate (36 g), tetradecaethylene glycol dimethacrylate (10 g) and tribromophenyl methacrylate (54 g), these monomers are used in an amount of 28 g, 5 g and 67 g, respectively. The resulting polymer has a refractive index of 1.57, a haze of 0.6, a remaining monomer of 1.8% and a frexural strength of 24.5 (250 kg/cm$^2$).

Reference Example 7

| | |
|---|---|
| Tribromophenyl methacrylate | 67 g |
| Methyl methacrylate | 28 g |
| Tetradecaethylene glycol dimethacrylate | 5 g |
| Azobisisobutyronitrile | 0.12 g |

The above ingredients are mixed and dissolved, and the mixture is entered into a mold (160×160×3

mm) and then polymerized at 80°C for one hour and thereafter allowed to stand at 120°C for one hour.

The polymer thus obtained has a remaining monomer of 9.1%, a flexural strength of 9.8 N/mm$^2$ (100 kg/cm$^2$) and shows heavy smell, and hence is not practically usable.

Example 8

Dibromostyrene (100 g), t-butyl peroxybenzoate (0.96 g), a 8 wt.% solution (1 g) of phenethyldibutylamine hydrochloride in dimethyl phthalate, glycol dimercaptoacetate (0.7 g), and a 0.1 wt.% solution (0.2 g) of copper naphthenate (Cu content : 10%) in methyl methacrylate are mixed and dissolved. The mixture is entered into a mold (150×150×3 mm) and polymerized on a water bath of 65°C. After about 3 minutes, the polymerization is completed.

The polymer thus obtained has an SH/Cu of 22, 233, a refactive index of 1.66, a haze of 1.0, and a flexural strength of 24.5 N/mm$^2$ (250 kg/cm$^2$).

Examples 9 to 11

A two liter glass-made flask is charged with the monomer as shown in Table 4 (700 g) and methyl methacrylate (300 g) and thereto is added azobisisobutyronitrile (0.04 g), and the mixture is polymerized at 80°C. When the viscosity of the inner solution in the flask becomes about 1 dPas (poise), the reaction mixture is cooled to stop the polymerization reaction, and thereby, there is obtained a syrup containing a copolymer.

To the above syrup (100 g) are added tetracosaethylene glycol dimethacrylate (10 g), cumene hydroperoxide (1.0 g), benzyltributylammonium chloride (0.1 g), a 0.01 wt.% solution (0.2 g) of copper acetylacetonate in methyl methacrylate, and pentaerythritol tetra(3-mercaptopropionate) (0.5 g). The mixture is entered into a stainless steel mold (160×160×3 mm) and subjected to polymerization reaction on a water bath of 85°C, and then the time for curing and also the flexural strength of the resulting polymer (SH/Cu : 53669) are measured. The results are shown in Table 4.

Table 4

| Ex. No. | Kind of monomer | Curing time (min.) | Flexural strength N/mm$^2$ |
|---|---|---|---|
| Ex. 9 | Octyl methacrylate | 3 | 49.0 (500 kg/cm$^2$) |
| " 10 | Isoboronyl methacrylate | 2 | 44.1 (450 kg/cm$^2$) |
| " 11 | Benzyl methacrylate | 3 | 49.0 (500 kg/cm$^2$) |

**Claims**

1. A process for the production of vinyl polymers which comprises polymerizing 100 parts by weight of a vinylic unsaturated monomer selected from a methacrylate of alcohols having 2 to 25 carbon atoms or phenols, a styrene derivative containing chlorine or bromine in the molecule thereof, a methacrylate containing chlorine or bromine in the molecule thereof, and an acrylate containing chlorine or bromine in the molecule thereof, or a mixture thereof which contains optionally a polymer of said monomer or monomers in the presence of 0.1 to 5 parts by weight of a radical polymerization initiator selected from a peroxy ester and a hydroperoxide, 0.005 to 1 part by weight of a chlorine-containing compound selected from an amine hydrochloride and a quaternary ammonium chloride, 0.1 to 0.8 ppm (calculated as metallic copper) per weight of said monomer of a copper compound selected from an organic acid copper salt and a copper-containing complex, and an amount satisfying the following equation of an S-containing compound containing two or more SH groups :

$$\frac{\text{Molar number of the S-containing compound} \times \text{Number of SH groups}}{\text{Molar number of the Cu-containing compound} \times \text{Number of copper atoms}} = 5{,}000 - 80{,}000.$$

2. The process according to claim 1 wherein the vinylic unsaturated monomer is a mixture of 100 parts by weight of a monofunctional monomer or the monomer containing partly a polymer thereof and 1 to 30 parts by weight of a polyfunctional unsaturated monomer, said monofunctional monomer being a methyacrylate of an alicyclic of aromatic alcohol having 6 to 25 carbon atoms or a phenol.

3. A process according to claim 1 or claim 2 wherein the polymerisation is carried out in a metallic mold to form a shaped object.

4. A process according to any one of the preceding claims wherein the mold is such as to produce a conventional lens, a Fresnel's lens, an optical recording disk, a prism or a mirror.

5. A process according to any one of the preceding claims wherein the mold is such as to produce an automobile window or an automobile sunroof, or a sign board, water tank panel or a bath tub.

## Ansprüche

1. Verfahren zur Herstellung von Vinylpolymerisaten, umfassend die Polymerisation von 100 Gew.-Teilen eines vinylisch ungesättigten Monomeren, ausgewählt aus einem Methacrylat von Alkoholen von 2 bis 25 Kohlenstoffatomen oder Phenolen, einem Styrolderivat mit Chlor- oder Brom in seinem Molekül, einem Methacrylat mit Chlor oder Brom in seinem Molekül, und einem Acrylat mit Chlor oder Brom in seinem Molekül, oder einem Gemisch davon, welches gegebenenfalls ein Polymer des oder der Monomeren enthält, in Gegenwart von 0,1 bis 5 Gew.-Teilen eines Radikal-Polymerisationsinitiators, ausgewählt aus einem Peroxyester und einem Hydroperoxid, 0,005 bis 1 Gew.-Teilen einer chlorhaltigen Verbindung, ausgewählt aus einem Amin-hydrochlorid und einem quaternären Ammoniumchlorid, 0,1 bis 0,8 ppm (berechnet als metallisches Kupfer) pro Gewicht des Monomers einer Kupferverbindung, ausgewählt aus einem Kupfersalz einer organischen Säure und einem kupferhaltigen Komplex, und einer der folgenden Gleichung genügenden Menge einer S-haltigen Verbindung mit zwei oder mehr SH-Gruppen :

$$\frac{\text{Molzahl der S-haltigen Verbindung} \times \text{Zahl der SH-Gruppen}}{\text{Molzahl der Cu-haltigen Verbindung} \times \text{Zahl der Kupferatome}} = 5000 - 80\,000$$

2. Verfahren nach Anspruch 1, wobei das vinylisch ungesättigte Monomere ein Gemisch von 100 Gew.-Teilen eines monofunktionellen Monomeren oder des teilweise ein Polymerisat davon enthaltenden Monomeren und 1 bis 30 Gew.-Teilen eines polyfunktionellen ungesättigten Monomeren ist, wobei das monofunktionelle Monomere ein Methacrylat eines alicyclischen oder aromatischen Alkohols mit 6 bis 25 Kohlenstoffatomen oder eines Phenols ist.

3. Verfahren nach Anspruch 1 oder Anspruch 2, wobei die Polymerisation in einer metallischen Form zur Erzeugung eines geformten Gegenstandes durchgeführt wird.

4. Verfahren nach einem der vorangehenden Ansprüche, wobei die Form derart ist, daß eine herkömmliche Linse, eine Fresnel-Linse, eine optische Aufnahmescheibe, ein Prisma oder ein Spiegel erzeugt wird.

5. Verfahren nach einem der vorhergehenden Ansprüche, wobei die Form derart ist, daß ein Automobilfenster oder ein Automobilsonnendach, oder eine Anzeigetafel, ein Wassertank-Paneel oder eine Badewanne erzeugt wird.

## Revendications

1. Un procédé pour la production de polymères vinyliques qui consiste à polymériser 100 parties en poids d'un monomère insaturé vinylique choisi parmi les méthacrylates d'alcools en $C_2$-$C_{25}$ ou de phénols,

les dérivés de styrène contenant du chlore ou du brome dans leur molécule, les méthacrylates contenant du chlore ou du brome dans leur molécule et les acrylates contenant du chlore ou du brome dans leur molécule ou un de leurs mélanges qui contient facultativement un polymère dudit ou desdits monomères en présence de 0,1 à 5 parties en poids d'un inducteur de polymérisation radicalaire choisi parmi les peroxyesters et les hydroperoxydes, 0,005 à 1 partie en poids d'un composé contenant du chlore choisi parmi les chlorhydrates d'amines et les chlorures d'ammonium quaternaires, 0,1 à 0,8 ppm en poids dudit monomère d'un composé de cuivre (calculé en cuivre métallique) choisi parmi les sels de cuivre d'acides organiques et les complexes contenant du cuivre et une quantité d'un composé soufré contenant au moins 2 groupes SH satisfaisant l'équation suivante :

$$\frac{\text{Nombre molaire du composé soufré} \times \text{Nombre de groupes SH}}{\text{Nombre molaire du composé contenant du cuivre} \times \text{Nombre d'atomes de cuivre}} = 5\,000 - 80\,000.$$

2. Un procédé selon la revendication 1, dans lequel le monomère insaturé vinylique est un mélange de 100 parties en poids d'un monomère monofonctionnel ou du monomère contenant partiellement un polymère de celui-ci et 1 à 30 parties en poids d'un monomère insaturé polyfonctionnel, ledit monomère monofonctionnel étant un méthacrylate d'un alcool alicyclique ou aromatique en $C_6$-$C_{25}$ ou d'un phénol.

3. Un procédé selon la revendication 1 ou 2, dans lequel la polymérisation est mise en oeuvre dans un moule métallique pour former un objet moulé.

4. Un procédé selon l'une quelconque des revendications précédentes, dans lequel le moule est un moule pour la production d'une lentille classique, d'une lentille de Fresnel, d'un milieu pour disques d'enregistrement optiques, d'un prisme ou d'un miroir.

5. Un procédé selon l'une quelconque des revendications précédentes, dans lequel le moule est un moule pour la production d'une fenêtre d'automobile ou d'un déflecteur solaire de toit d'automobile ou d'un panneau de signalisation, d'un panneau de réservoir d'eau ou d'une baignoire.